# EUROPÄISCHE PATENTSCHRIFT

(11) **EP 1 189 040 B1**
(45) Veröffentlichungstag und Bekanntmachung des Hinweises auf die Patenterteilung: **13.06.2012**
(21) Anmeldenummer: 01121617.3
(22) Anmeldetag: 11.09.2001
(51) Int. Cl.: G01F 23/284

(54) **Stutzen mit Eindrahtleitung für eine Mikrowellen-Füllstandsmesseinrichtung**
Single-wire support for microwave level measurement device
Support à fil unique pour appareil de mesure de niveau à microondes

(30) Priorität: 18.09.2000 DE 10045997
(43) Veröffentlichungstag der Anmeldung: 20.03.2002
(73) Patentinhaber: VEGA Grieshaber KG, 77709 Wolfach (DE)
(72) Erfinder: Fünfgeld, Martin, Dipl.-Ing., 77749 Hohberg (DE)
(74) Vertreter: Maiwald Patentanwalts GmbH

(56) Entgegenhaltungen:
- EP-A- 0 780 664
- EP-A- 0 882 955
- EP-A- 0 884 567
- EP-A- 0 971 213
- DE-A- 4 404 745

## Beschreibung

### TECHNISCHES GEBIET

Die Erfindung betrifft einen Stutzen für eine nach dem Prinzip der geführten Mikrowelle arbeitende Füllstandmesseinrichtung mit Eindrahtleitung. Ein solcher Stutzen umfasst ein Stutzenoberteil und eine unterhalb des Stutzenoberteils angeordnete Stutzenwandung mit einer Stutzenwandungshöhe. Das Stutzenoberteil des Stutzens ist dazu ausgebildet, dass daran eine nach dem Prinzip der geführten Mikrowelle arbeitende Füllstandmesseinrichtung mit einem einzigen elektrischen Leiter bzw. einer einzigen elektrischen Leitung zur Führung von UP:up

Mikrowellensignalen (insbesondere Mikrowellenimpulse) zu einem Füllgut hin und zur Rückführung von an der Füllgutoberfläche reflektierten Mikrowellen anbringbar ist. Derartige Stutzen werden insbesondere in Behältern wie Tanks, Bevorratungsbehältnisse für irgendwelche Füllgüter, offene Behältnisse etc. montiert. Stutzen der hier genannten Art sind aber auch in Decken- oder Wandelementen einsetzbar.

Die Erfindung betrifft ferner eine Füllstandmesseinrichtung, die nach dem Prinzip der geführten Mikrowelle arbeitet und eine einzige Eindrahtleitung zum Führen der Mikrowelle aufweist. Diese Füllstandmesseinrichtung ist an einer Befestigungseinrichtung, insbesondere ein Stutzen oder Flansch, angebracht.

Von einer geführten Mikrowelle - auch als "Time Domain Reflectrometry (TDR)" bezeichnet - spricht man in diesem Zusammenhang, wenn hochfrequente Mikrowellenimpulse entlang eines elektrischen Leiters geführt werden. Ein solcher elektrischer Leiter kann beispielsweise ein Draht, ein Stahlseil oder auch ein Metallstab sein. Der elektrische Leiter reicht bis in das Füllgut. Beim Auftreffen auf die Füllgutoberfläche werden die Mikrowellenimpulse reflektiert. Die Laufzeit der Impulse wird von der meist integrierten Elektronik in der Füllstandmesseinrichtung ausgewertet und als Füllhöhe ausgegeben. Mit derartigen Füllstandmesseinrichtungen können die Füllhöhen von Schüttgütern aller Art, aber auch von Flüssigkeiten, gemessen werden. Der Vorteil dieser Füllstandmesseinrichtung besteht darin, dass die Dichte, Leitfähigkeit und Dielektrizität des Füllguts die Messungen nicht beeinträchtigen. Auch wechselnde Schüttguteigenschaften können den Messwert nicht beeinflussen. So sind auch insbesondere Kalk, Zement, Getreide, Kunststoffgranulat, Mehl, Kies mit Füllstandmesseinrichtungen der genannten Art messbar. Die Füllhöhe wird auch in Füllgütern mit wechselnder Feuchte oder schwankender Dielektrizität sicher erfasst. Insbesondere auch hohe, schlanke Behälter, in denen berührungslose Messverfahren oft Schwierigkeiten haben, sind mit den genannten Füllstandmesseinrichtungen problemlos messbar. Beispielsweise wird eine derartige Füllstandmesseinrichtung unter der Bezeichnung Vegaflex vertrieben. Diesbezüglich ist noch anzumerken, dass unter den Begriff "Füllstandmesseinrichtung" auch Einrichtungen zu subsumieren sind, deren Auswertungselektronik nicht unmittelbar in einem Gehäuse der Füllstandmesseinrichtung integriert ist, sondern an anderer Stelle untergebracht ist.

### STAND DER TECHNIK

Füllstandmesseinrichtungen der zuvor erläuterten Art werden oftmals in Stutzen eines Behälters mit darin enthaltenem Füllgut eingebaut. Zur Aufnahme einer Füllstandmesseinrichtung der zuvor erläuterten Art bestehen solche Stutzen grundsätzlich aus einem Stutzenoberteil in Form einer Flanschplatte mit mittiger Durchbohrung und einer darunter angeordneten Stutzenwandung wie beispielsweise ein Rohrstück. Die Stutzenwandung kann im Querschnitt zylindrisch oder auch mehreckig ausgebildet sein. Die Stutzen bestehen in den überwiegenden Fällen aus Metall und dementsprechend sind das Stutzenoberteil und die Stutzenwandung auch meist miteinander verschweißt. Selbstverständlich können je nach Anwendungsgebiet aber auch andere Verbindungstechniken für diese Stutzenteile eingesetzt werden. Denkbar wäre auch eine einstückige Ausbildung.

Baut man nun eine Füllstandmesseinrichtung, die nach dem Prinzip der geführten Mikrowelle arbeitet, in einen Stutzen ein, so entstehen Überlagerungen auf der sogenannten Echoprofilkurve. Die Überlagerungen sind insbesondere vom Stutzenradius abhängig und können sich über mehrere Meter nach dem Stutzenende, d.h. dem freien Rand der Stutzenwandung, hinziehen. Bei sehr kleinen oder auch sehr großen Stutzenradien treten keine bzw. relativ geringe Überlagerungen auf, aber bei den in der Anlagentechnik häufig anzutreffenden Stutzengrößen sind die störenden Überlagerungen häufig. Die Überlagerungen erschweren oder machen sogar eine Detektion von kleineren Echos unmöglich. So sind insbesondere unmittelbar am Stutzenende und in dessen Nahbereich Echos gar nicht oder nur schwer detektierbar. Schlimmstenfalls können derartige Überlagerungen dazu führen, dass keine sinnvolle Füllstandmessung vorgenommen werden kann.

Um dieses Problem zu beseitigen, ist es bereits bekannt, ein sogenanntes Horn einzusetzen, das die Füllstandmesseinrichtung zumindest im Stutzenbereich umgibt. Hierzu wird beispielsweise auf die DE 44 04 745 A1 verwiesen. Bei der hierin gezeigten Einrichtung zur Füllstandmessung ist eine Sende- und Empfangsvorrichtung und ein sich bis in das Füllgut, dessen Füllstandshöhe zu messen ist, hineinerstreckender Einzelleiter vorhanden. Die Sende- und Empfangseinrichtung ist über ein Koaxialkabel mit dem Einzelleiter verbunden. Bei dieser Ausgestaltung werden von der Sendeeinrichtung emittierte elektromagnetische Wellen vom Einzelleiter in Richtung Füllgut geführt, an dessen Oberfläche reflektiert und von der Empfangseinrichtung detektiert. Durch einen an einem Montageflansch befestigten, aus elektrisch leitendem Material gefertigten Anpassungstrichter wird eine Impedanzanpassung zwischen dem Koaxialkabel und dem Einzelleiter erreicht, was Reflexionen bei der Übertragung des Messsignals vermindert. Der Anpassungstrichter weist hierbei eine trichterartige Kontur auf, die sich in Richtung Füllgutoberfläche aufweitet.

Aus der EP 0 780 664 A2 ist ebenfalls eine Sensoreinrichtung zur Füllstandsmessung bekannt, bei der über einen leitenden Stab das von einer Sendeeinrichtung emittierte Signal bis zum zu messenden Füllgut geleitet wird. Der Stab ist hier am Behälter über ein System aus mehreren Flanschen, die als Stutzen interpretiert werden können, verbunden.

Es ist auch bekannt, anstatt der Eindrahtleitung zwei parallele Leitungen vorzusehen; man spricht dann von einer nach dem Prinzip der geführten Mikrowelle arbeitenden Füllstandmesseinrichtung mit Zweidrahtleitung. Außerdem ist es bekannt, anstatt der Eindrahtleitung eine Koaxialleitung vorzusehen.

All diese bekannten Lösungen sind aufwendig und teuer in der Herstellung und auch schwierig zu montieren. So ist es insbesondere bei der Füllstandmesseinrichtung mit zwei Leitungen notwendig, in regelmäßigen Abständen Abstandshalter vorzusehen, um sicherzustellen, dass die zwei Leitungen immer genau den gleichen Abstand zueinander aufweisen. Diese Abstandshalter erzeugen allerdings Störreflexionen und dadurch auch Meßungenauigkeiten. Zwischen zwei Leitungen ist es auch möglich, dass sich Ablagerungen ansetzen, was zu einem Ausfall oder Ungenauigkeiten der Messung führen kann. Gleiches gilt auch für die Lösung mit einer Koaxialleitung. Die Koaxialleitung ist zudem mit dem Problem behaftet, dass diese nicht bei Schüttgütern einsetzbar ist.

Ferner ist aus EP 0 882 955 A1 ein mit Mikrowellen arbeitendes Füllstandsmessgerät bekannt, mit einem Generator zur Erzeugung von Mikrowellen, mindestens einer Antenne zum Senden und Empfangen von Mikrowellen, einer Mikrowellenleitung, die vom Generator zur Antenne führt und die eine Signalleitung und mindestens eine Schirmleitung aufweist.

### DARSTELLUNG DER ERFINDUNG

Der Erfindung liegt somit das technische Problem zugrunde, einen Stutzen bereitzustellen, der einfach und kostengünstig herzustellen ist, jedoch geringere Störeinflüsse bei der Verwendung in Kombination mit einer nach dem Prinzip der geführten Mikrowelle arbeitenden Füllstandmesseinrichtung mit Eindrahtleitung verursacht.

Der Erfindung liegt ferner das technische Problem zugrunde, ein nach dem Prinzip der geführten Mikrowelle arbeitende Füllstandmesseinrichtung mit Eindrahtleitung bereitzustellen, die mit einer zur Befestigung der Füllstandmesseinrichtung an einem Behälter dienenden Befestigungseinrichtung wie beispielsweise einem Stutzen versehen ist, wobei diese Kombination von Füllstandmesseinrichtung und Befestigungseinrichtung weniger Störungen als bisher verursachen soll.

Diese technischen Probleme werden durch einen erfindungsgemäßer Stutzen nach Anspruch 1 und eine erfindungsgemäße Füllstandsmessanordnung nach Anspruch 9 gelöst.

Der Stutzen umfasst ein Stutzenoberteil, in dem eine nach dem Prinzip der geführten Mikrowelle arbeitende Füllstandmesseinrichtung mit einer einzigen elektrischen Leitung anbringbar ist. Unterhalb des Stutzenoberteils ist eine Stutzenwandung mit einer Stutzenwandungshöhe angeordnet. Es ist zumindest ein elektrischer Leiter vorhanden, der von der einzigen elektrischen Leitung der am Stutzenoberteil anzubringenden Füllstandmesseinrichtung beabstandet ist und sich vom Stutzenoberteil bis mindestens zur 0,25-fachen erstreckt. Insbesondere ist es vorteilhaft, wenn der Leiter sich maximal bis zur 2,5-fachen Stutzenwandungshöhe erstreckt.

Ein derartiger Stutzen reduziert die bisher durch den Stutzen selbst verursachten Überlagerungen. Damit können Echos auf dem Leiter für die Mikrowelle nunmehr auch im Nahbereich detektiert oder zumindest besser detektiert werden als bisher. Erstmals wird durch den zumindest einen zusätzlichen elektrischen Leiter im Stutzen im bisher kritischen Bereich eine Zweidrahtleitung nachempfunden, die aber dann im eigentlichen Messbereich in eine Eindrahtleitung übergeht. Somit werden die positiven Eigenschaften der Eindrahtleitung mit der einer Zweidrahtleitung im Stutzenbereich äußerst vorteilhaft miteinander kombiniert. Die größere Unempfindlichkeit der Zweidrahtleitung gegenüber Störungen wird hier für den Bereich des Stutzens genutzt. Damit bleiben im eigentlichen Messbereich innerhalb des Behälters die bisherigen positiven Eigenschaften der Füllstandmesseinrichtung mit Eindrahtleitung erhalten. Es ist noch anzumerken, dass sich die Stutzenwandung aus einem oder mehreren Segmenten zusammensetzten kann. Es muss nicht zwingend eine durchgehende Wand gebildet sein. Jedwede Wandgestaltung, die eine Erstreckungshöhe von dem Stutzenoberteil ausweist, ist hierunter zu subsumieren.

Grundsätzlich ist also festzustellen, dass ein oder mehrere zusätzliche elektrische Leiter im Stutzen angebracht werden können. Diese zusätzlichen elektrischen Leiter können entweder parallel oder nicht-parallel zu der Eindrahtleitung der Füllstandmesseinrichtung angebracht sein. Im letzteren Fall nimmt deren Abstand zu der Eindrahtleitung in Richtung zum freien Rand der Stutzenwandung zu. Dadurch erfolgt eine langsame Impedanzanpassung von der sogenannten Einkopplung (Beginn der Eindrahtleitung an der Füllstandmesseinrichtung) zu dem offenen Wellenleiter hin. Durch die zunehmende, langsam ansteigende Impedanzanpassung werden für eine Messung nachteilige Impedanzsprünge weitgehend vermieden und damit auch hierdurch bedingte Störreflexionen.

Es ist insbesondere bei Stutzen aus Metall vorteilhaft, dass der zumindest eine elektrische Leiter die Stutzenwandung berührt. Dadurch wird der zumindest eine elektrische Leiter auf das gleiche elektrische Potenzial wie der Stutzen gelegt, was zur Verringerung der Störeinflüsse beiträgt.

Wie bereits zuvor erwähnt, ist es vorteilhaft, wenn der zumindest eine zusätzliche elektrische Leiter zum freien Rand der Stutzenwandung hin einen zunehmenden Abstand zur Eindrahtleitung der Füllstandmesseinrichtung aufweist. Es ist hierbei aber noch weiter vorteilhaft, wenn der elektrische Leiter zumindest in einem Teillängenbereich gekrümmt ist, wodurch Impedanzsprünge und dadurch bedingte Störreflexionen noch besser verhindert werden können.

Eingangs wurde bereits ausgeführt, dass es zur Verringerung der Störeinflüsse des Stutzens erfindungsgemäß vorteilhaft ist, dass sich der oder die Leiter zumindest bis zur 0,25-fachen Höhe der Stutzenwandung erstrecken. Je nach Anwendungsgebiet können auch Erstreckungen bis zur 0,3-, 0,35-, 0,4-,..., 2,5-fachen Höhe der Stutzenwandung zweckmäßig sein. Selbstverständlich sind auch Erstreckungen möglich, die zwischen den genannten Vielfachen liegen, so beispielsweise eine Erstreckung bis zum 0,31-, oder 0,36-fachen der genannten Stutzenwandungshöhe. Sehr gute Ergebnisse wurden auch erzielt, wenn sich das Ende des zumindest einen zusätzlichen elektrischen Leiters im Bereich des freien Randes der Stutzenwandung befindet. Ferner sind alle Zwischenhöhen praktikabel, d.h. der Leiter erstreckt sich bis zu einer beliebigen Höhe, die zwischen den zuvor angegebenen Werten liegt.

Der anfängliche Abstand zwischen dem zumindest einen zusätzlichen elektrischen Leiter und der Eindrahtleitung der Füllstandmesseinrichtung kann in Abhängigkeit vom Stutzendurchmesser und der Stutzenwandungshöhe festgelegt werden. Beispielsweise hat sich bei einem Stutzendurchmesser von 31 cm und einer Stutzenwandungshöhe von 33 cm ein Abstand von 8 cm als äußerst zweckmäßig erwiesen. Weitere zweckmäßige Abstände können durch Versuche ermittelt werden.

Eine äußerst einfache und kostengünstige Variante besteht darin, den zumindest einen elektrischen Leiter als Metallstab auszubilden, der an einem Ende ein Gewinde aufweist, mit dem der Metallstab am Stutzenoberteil in eine entsprechende Gewindebohrung eingebracht wird. Es ist aber auch möglich, jede andere Halterungsart vorzusehen, beispielsweise Schweißung, Lötung oder Klemmverbindung. Der elektrische Leiter kann auch als Draht oder Seil ausgebildet sein, das sich dann durch entsprechende Halterungen in der gewünschten Art im Stutzen erstreckt. Es sei hier zudem noch angemerkt, dass der Querschnitt des zumindest einen zusätzlichen elektrischen Leiters rund, quadratisch, rechteckig oder vieleckig sein kann.

Eine erfindungsgemäße Füllstandsmessanordnung besteht aus einer Kombination eines Füllstandmessgerätes, das nach dem Prinzip der geführten Mikrowelle arbeitet und mit einer Eindrahtleitung ausgebildet ist, mit einer Befestigungseinrichtung, beispielsweise ein Stutzen, an der wiederum zumindest ein elektrischer Leiter angebracht ist, der von der einzigen Eindrahtleitung des Füllstandmessgerätes beabstandet angeordnet ist und eine gegenüber der Länge der Eindrahtleitung weitaus geringere Länge hat, sich also insbesondere nur bis zum Behälterinneren reichenden Rand der Befestigungseinrichtung oder nur wenig darüber erstreckt. Damit reicht also dieser zusätzliche Leiter vorzugsweise maximal bis zum dem dem Behälterinnern zugewandten Stutzenrand oder wenig darüber. Das heißt, der zumindest eine weitere elektrische Leiter erstreckt sich nicht in den eigentlichen Messbereich im Behälterinneren, sondern nur in den sich aufgrund von Störreflexionen kritischen Bereich, also insbesondere nur im Befestigungsraum bzw. dem Innern des Befestigungsstutzens. Wenn der Befestigungsstutzen eine Stutzenwandungshöhe hat, erstreckt sich dann der zumindest eine zusätzliche Leiter vorzugsweise maximal bis zur 2,5-fachen Stutzenwandungshöhe. Die Stutzenwandungshöhe ist insbesondere ab dort zu messen, wo die Eindrahtleitung des Füllstandsmessgerätes aus der zugehörigen Halterung im Füllstandmessgerät austritt.

Selbstverständlich kann eine solche Kombination aus Füllstandmessgerät und Befestigungseinrichtung in der zuvor zu dem erfindungsgemäßen Stutzen beschriebenen Weise abgewandelt werden, d.h. es können auch mehrere Leiter parallel oder nicht parallel zu der Eindrahtleitung im Austrittsbereich vorhanden sein. Insbesondere können diese ein mehreren zusätzlichen Leiter auch gekrümmt sein, insbesondere auch so gekrümmt sein, dass der Abstand zu der Eindrahtleitung des Füllstandmessgerätes in Richtung zu dem zu messenden Füllgut hin immer größer wird. Die Leiter können auf jede erdenkliche Weise befestigt sein, insbesondere auch über ein Gewinde im Befestigungsflansch des Füllstandmessgerätes angebracht sein. Darüber hinaus sind natürlich auch alle möglichen Querschnitte denkbar, insbesondere runde Querschnitte aber auch mehreckige Querschnitte. Darüber hinaus können die Durchmesser der zusätzlichen Leiter an die jeweiligen Gegebenheiten angepasst sein.

### KURZE BESCHREIBUNG DER ZEICHNUNGEN

Im folgenden sind zur weiteren Erläuterung und zum besseren Verständnis mehrere Ausführungsformen der Erfindung näher beschrieben. Es zeigt:
- Fig. 1: eine schematisierte Querschnittsansicht eines Behälters mit einem erfindungsgemäßen Stutzen, an dem ein nach dem Prinzip der geführten Mikrowelle arbeitende Füllstandmesseinrichtung mit Eindrahtleitung angebracht ist,
- Fig. 2: einen erfindungsgemäßen Stutzen mit zur Eindrahtleitung der Füllstandmesseinrichtung parallelem zusätzlichen elektrischen Leiter,
- Fig. 3: eine weitere Ausführungsform eines erfindungsgemäßen Stutzens mit zwei nicht- parallelen zusätzlichen Leitern, die bis zum Rand der Stutzenwandung reichen,
- Fig. 4: eine weitere Ausführungsform der Erfindung mit einem nicht-parallelen Leiter, der sich nur bis ungefähr ¾ der Stutzenwandungshöhe erstreckt,
- Fig. 5: eine weitere Ausführungsform eines erfindungsgemäßen Stutzens mit nicht-parallelem Leiter, der sich bis über den Rand der Stutzenwandung hinaus erstreckt,
- Fig. 6: eine weitere Ausführungsform eines erfindungsgemäßen Stutzens mit zwei zusätzlichen Leitern im Stutzen, die sich teilweise parallel, teilweise nicht-parallel zu dem einzigen Leiter der Füllstandmesseinrichtung erstrecken,
- Fig. 7: eine weitere Ausführungsform eines erfindungsgemäßen Stutzens mit sich krümmendem zusätzlichen elektrischen Leiter, und
- Fig. 8: eine Detailansicht einer Befestigung des zusätzlichen elektrischen Leiters gemäß der Fig. 6 in einer Gewindebohrung.

### BESCHREIBUNG VON AUSFÜHRUNGSBEISPIELEN DER ERFINDUNG

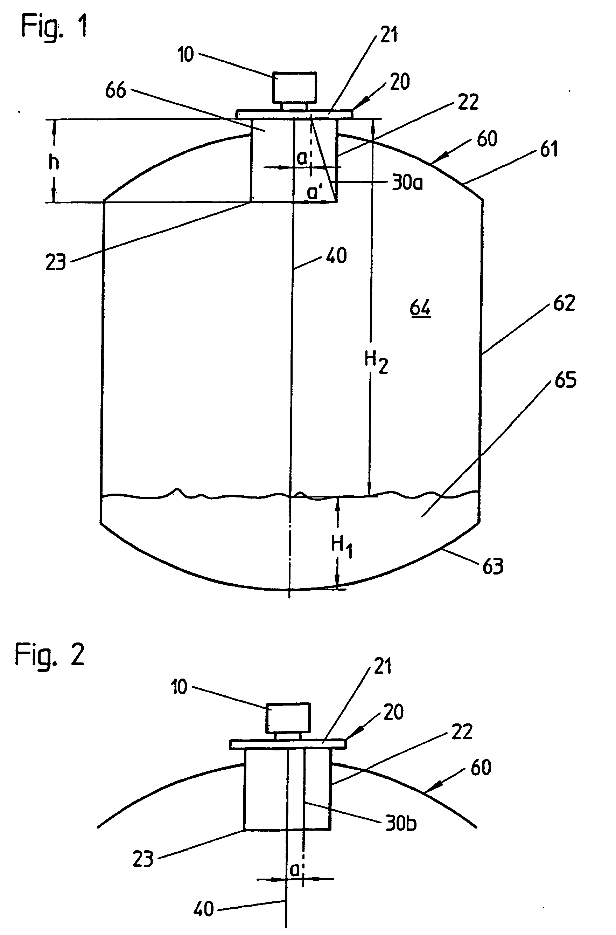

Aus der Fig. 1 ist der allgemeine Aufbau eines Behälters 60 ersichtlich. Der Behälter 60 weist einen Behälteroberteil 61 auf, an den sich eine zylindrische Behälterwandung 62 anschließt. Bodenseitig ist der Behälter 60 durch einen Behälterboden 63 verschlossen. Der Behälterboden 63 ist mit der Behälterwandung 62 beispielsweise verschweißt. Gleiches gilt für die Verbindung zwischen dem Behälteroberteil 61 und der Behälterwandung 62. Im Behälterraum 64 ist irgendein Schüttgut 65 gelagert. Dieses Schüttgut 65 reicht bis zu einer Höhe H₁.

Im Behälteroberteil 61 ist eine Öffnung 66 vorhanden, in den ein Stutzen 20 eingesetzt ist. Der Stutzen 20 setzt sich aus einem Stutzenoberteil 21 (hier eine kreisrunde Platte) und einer zylindrischen Stutzenwandung 22 zusammen. Die Stutzenwandung 22 ist im Durchmesser kleiner als das Stutzenoberteil 21. In dem Stutzenoberteil 21 ist mittig eine Öffnung (hier nicht gezeigt) vorhanden, in die eine Füllstandmesseinrichtung 10 eingebaut ist. Es sei hier angemerkt, dass die Öffnung für die Füllstandmesseinrichtung 10 selbstverständlich auch außermittig positioniert sein kann. Die Füllstandmesseinrichtung 10 arbeitet nach dem Prinzip der geführten Mikrowelle mit Eindrahtleitung. Die Eindrahtleitung ist hier mit dem Bezugszeichen 40 gekennzeichnet. Diese reicht bis in das Schüttgut 65.

In einem Abstand a ist an dem Stutzenoberteil 21 ein zusätzlicher Leiter 30a befestigt. Wie in der Fig. 1 gezeigt, ändert sich der Abstand a zum freien Rand 23 der Stutzenwandung 22. Der Abstand a' wird immer größer. Bei der hier gezeigten Ausführungsform reicht der zusätzliche elektrische Leiter 30a, hier ein Metallstab, bis an den Rand 23 der Stutzenwandung 22 und berührt diese. Die Befestigung des Metallstabs 30a am Stutzenoberteil 21 kann durch Schweißen, Kleben, Löten, Klemmen, Einpassen in eine Presspassung, durch eine Gewindeverbindung etc. erfolgen.

Nachfolgend wird nun anhand der Fig. 1 die grundsätzliche Ermittlung der Füllstandshöhe H₁ beschrieben. In der Füllstandmesseinrichtung 10 werden hochfrequente Mikrowellenimpulse erzeugt und entlang des elektrischen Leiters 40 in Richtung der Füllung 65 geführt. Beim Auftreffen auf die Füllgutoberfläche werden die Mikrowellenimpulse reflektiert. Durch Ermittlung der Laufzeit der Impulse unter Berücksichtigung der Höhe H₂ wird von der in der Füllstandmesseinrichtung 10 integrierten Elektronik und die Füllhöhe H₁ ermittelt und ausgegeben.

Da hier ein zusätzlicher Leiter 30a in Form eines Metallstabs vorhanden ist, werden die ansonsten durch den Stutzen 20 bedingten Störreflexionen abgemildert bzw. verhindert. Hier wird durch die Nicht-Parallelität des Metallstabs 30a die Impedanz langsam angepasst. Somit kann nun auch bei sehr großen Füllhöhen H₁, die in den Bereich des Stutzens 20 reichen, ohne Störreflexionen die Füllstandshöhe H₁ korrekt ermittelt werden.

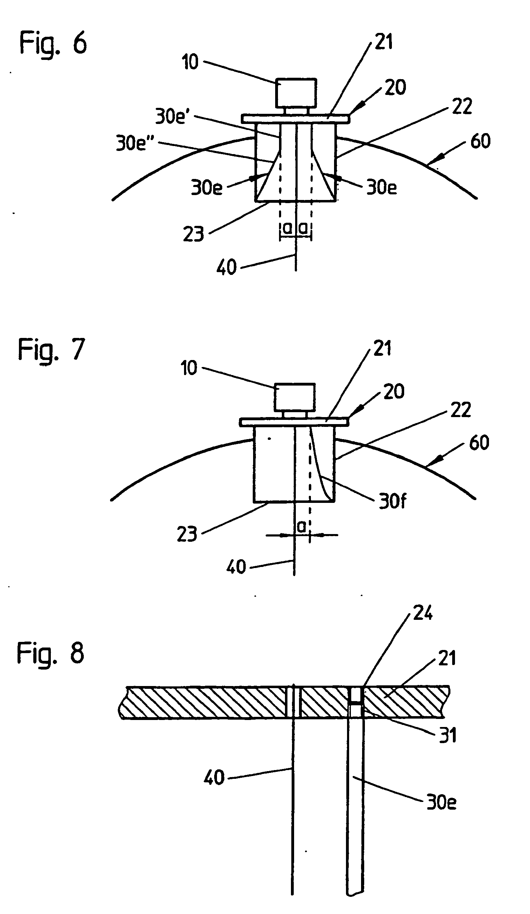

Bei den nachfolgenden weiteren Ausführungsformen der Erfindung gemäß den Fig. 2-8 sind für mit der Ausführungsform gemäß der Fig. 1 übereinstimmende Bauteile die gleichen Bezugszeichen verwendet. Eine nähere Erörterung dieser Bezugszeichen erübrigt sich somit in Verbindung mit den Fig. 2 und 8. Es wird diesbezüglich auf die Beschreibung gemäß der Fig. 1 verwiesen.

Die in der Fig. 2 gezeigte Ausführungsform eines erfindungsgemäßen Stutzens 20 weist einen zusätzlichen elektrischen Leiter 30b auf, der parallel zur Eindrahtleitung 40 der Füllstandmesseinrichtung 10 in einem Abstand a angeordnet ist. Bei dieser Ausführungsform reicht wiederum der Leiter 30b bis zum Stutzenrand 23, wie es auch bei der Ausführungsform gemäß der Fig. 1 der Fall war. Die Befestigung des zusätzlichen Leiters 30b am Stutzenoberteil 21 kann wie bei der Ausführungsform gemäß der Fig. 1 ausgeführt sein.

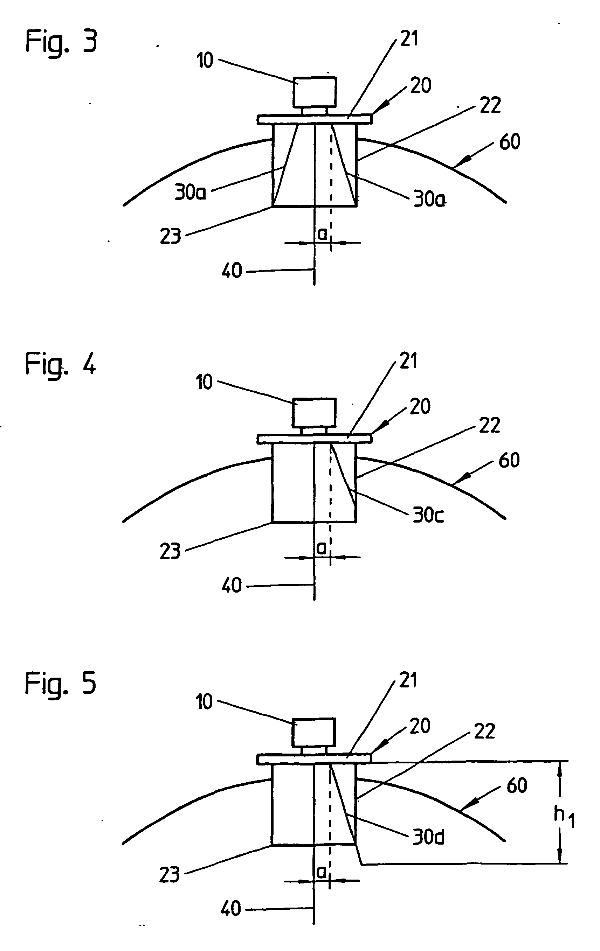

Die in der Fig. 3 gezeigte Ausführungsform eines erfindungsgemäßen Befestigungsstutzens unterscheidet sich von der in der Fig. 1 gezeigten lediglich dadurch, dass anstatt eines einzigen zusätzlichen Leiters 30a zwei zusätzliche Leiter 30a vorhanden sind. Diese zusätzlichen elektrischen Leiter 30a sind einander spiegelbildlich zur Eindrahtleitung 40 der Füllstandmesseinrichtung 10 gegenüberliegend angeordnet. Es ist selbstverständlich aber auch möglich, anstatt zweier zusätzlicher Leiter 30a drei oder mehr zusätzliche Leiter vorzusehen. Vorzugsweise werden diese dann in gleichen Winkelabständen zueinander angeordnet.

Die Ausführungsform gemäß der Fig. 4 unterscheidet sich von der gemäß der Fig. 1 darin, dass der zusätzliche elektrische Leiter 30c nicht bis zum Stutzenrand 23 reicht, sondern sich nur bis etwa 2/3 oder 3/4 der Stutzenwandungshöhe h erstreckt. Auch bei dieser Ausführungsform gemäß der Fig. 4 berührt der zusätzliche elektrische Leiter 30c die Stutzenwandung 22 innenseitig.

Im Gegensatz zu der Ausführungsform gemäß der Fig. 4 ist die Ausführungsform eines erfindungsgemäßen Stutzens 20 nach Fig. 5 mit einem zusätzlichen elektrischen Leiter 30d ausgestattet, der sich über den Rand 23 der Stutzenwandung 22 erstreckt. Die projizierte Länge h₁ des elektrischen Leiters 30d von dem Stutzenoberteil zu seinem Ende beträgt ungefähr das 1,2-fache der Höhe h der Stutzenwandung. Es sind aber auch Fälle möglich, wo das Verhältnis h₁ zu h etwa 1,5 beträgt oder sogar 2,5.

Die in der Fig. 6 gezeigte Ausführungsform eines erfindungsgemäßen Stutzens 20 umfasst zwei zusätzliche elektrischer Leiter 30e, die in einem ersten Teilbereich 30e' parallel zur Eindrahtleitung 40 der Füllstandmesseinrichtung 10 verlaufen und in einem zweiten Teilbereich 30e" einen zunehmenden Abstand a zur Eindrahtleitung 40 einnehmen. Die nicht-parallelen Abschnitte 30e" der Leiter 30e enden wiederum im Bereich des freien Randes 23 der Stutzenwandung 22. Bei diesem Ausführungsbeispiel ist es aber auch möglich, anstatt der zwei Leiter 30e nur einen Leiter 30e vorzusehen.

In der Fig. 7 ist eine weitere Ausführungsform des erfindungsgemäßen Stutzens 20 gezeigt. Hier ist ein zusätzlicher elektrischer Leiter 30f vorhanden, der sich mit zunehmendem Abstand von dem Stutzenoberteil 21 immer stärker krümmt und bis zur Stutzenwandung 22 reicht und diese berührt.

In der Fig. 8 ist eine Detailansicht der Befestigung eines zusätzlichen Leiters 30e, wie in der Fig. 6 dargestellt, gezeigt. Hier ist das eine Ende des zusätzlichen Leiters 30e mit einem Gewinde 31 versehen. Das Gewindeende ist in eine Gewindebohrung 24 des Stutzenoberteils 21 eingeschraubt. So ist eine einfache, kostengünstige und äußerst stabile Befestigung des Leiters 30e erzielt.

Es versteht sich, dass je nach Anwendungsfall die Wahl der Querschnitte und des Materials der zusätzlichen Leiter variiert werden kann. Gleiches gilt auch für die Form des elektrischen Leiters in dessen Längsrichtung.

### BEZUGSZEICHENLISTE

- a: Abstand
- a': Abstand
- H₁: Füllstandshöhe
- H₂: Abstand Stutzenoberteil zu Füllgutoberfläche
- h: Stutzenwandungshöhe
- h₁: Projizierte Länge eines elektrischen Leiters
- 10: Füllstandmesseinrichtung
- 20: Stutzen
- 21: Stutzenoberteil
- 22: Stutzenwandung
- 23: Stutzenrand
- 24: Gewindebohrung
- 30a": elektrischer Leiter
- 30b: elektrischer Leiter
- 30c: elektrischer Leiter
- 30d: elektrischer Leiter
- 30e: elektrischer Leiter
- 30e': Teilbereich eines elektrischen Leiters
- 30e": Teilbereich eines elektrischen Leiters
- 30f: elektrischer Leiter
- 31: Gewinde
- 40: Eindrahtleitung
- 60: Behälter
- 61: Behälteroberteil
- 62: Behälterwandung
- 63: Behälterboden
- 64: Behälterraum
- 65: Schüttgut
- 66: Öffnung

## Patentansprüche

1. Stutzen zum Anbringen einer nach dem Prinzip der geführten Mikrowelle arbeitenden und mit einer einzigen elektrischen Leitung (40) zum Führen der Mikrowelle bis in ein Füllgut hinein ausgestatteten Füllstandmesseinrichtung (10) mit Eindrahtleitung, mit
einem Stutzenoberteil (21), in dem die nach dem Prinzip der geführten Mikrowelle arbeitende Füllstandmesseinrichtung (10) mit Eindrahtleitung anbringbar ist, **dadurch gekennzeichnet, dass**
zumindest ein zusätzlicher elektrischer Leiter (30a, 30b, 30c, 30d, 30e, 30f) in Form eines Stabes, eines Drahtes oder eines Seils, von der einzigen elektrischen Leitung (40) der am Stutzenoberteil (21) anzubringenden Füllstandmesseinrichtung (10) in einem Abstand (a) angeordnet ist und sich vom Stutzenoberteil (21) derart weg erstreckt, dass eine Impedanzanpassung zwischen einem Beginn der einzigen elektrischen Leitung (40) und einem durch die bis in ein Füllgut hineinreichende einzige elektrische Leitung (40) gebildeten offenen Wellenleiter erfolgt, wobei der zusätzliche Leiter (30a, 30b, 30c, 30d, 30e, 30f) eine wesentlich geringere Länge als die einzige elektrische Leitung (40) aufweist.

2. Stutzen nach Anspruch 1, ferner mit einer unterhalb des Stutzenoberteils (21) angeordneten und sich in Richtung eines Füllgutes erstreckenden Stutzenwandung (22) mit einer Stutzenwandungshöhe (h), gemessen ab einem Austritt der Eindrahtleitung, wobei der zumindest eine zusätzliche elektrische Leiter (30a, 30b, 30c, 30d, 30e, 30f) von der einzigen elektrischen Leitung (40) der am Stutzenoberteil (21) anzubringenden Füllstandmesseinrichtung (10) in einem Abstand (a) angeordnet ist und sich vom Stutzenoberteil (21) bis mindestens zur 0,25-fachen Stutzenwandungshöhe (h) erstreckt.

3. Stutzen nach Anspruch 2, **dadurch gekennzeichnet, dass** der zumindest eine zusätzliche elektrische Leiter sich maximal bis zur 2,5-fachen Stutzenwandungshöhe (h) erstreckt.

4. Stutzen nach einem der Ansprüche 2 bis 3, **dadurch gekennzeichnet, dass** der zumindest eine zusätzliche elektrische Leiter (30a, 30b, 30c, 30d, 30e, 30f) in einem Bereich eines dem Stutzenoberteil (21) abgewandten freien Randes (23) der Stutzenwandung (22) endet.

5. Stutzen nach einem der Ansprüche 1 bis 4, **dadurch gekennzeichnet, dass** der zumindest eine zusätzliche elektrische Leiter (30a, 30b, 30c, 30d, 30e, 30f) so angeordnet ist, dass der Abstand (a) zu der einzigen elektrischen Leitung (40) mit zunehmendem Abstand zu dem Stutzenoberteil (21) zunimmt.

6. Stutzen nach einem der Ansprüche 1 bis 5, **dadurch gekennzeichnet, dass** der zumindest eine zusätzliche elektrische Leiter (30a, 30b, 30c, 30d, 30e, 30f) zumindest in einem Teillängenbereich gekrümmt ist.

7. Stutzen nach einem der Ansprüche 2 bis 6, **dadurch gekennzeichnet, dass** die Stutzenwandung (22) aus einem elektrisch leitenden Material besteht und der zumindest eine zusätzliche elektrische Leiter (30a, 30b, 30c, 30d, 30e, 30f) die aus einem elektrisch leitendem Material bestehende metallische Stutzenwandung (22) berührt.

8. Stutzen nach einem der Ansprüche 1 bis 4, **dadurch gekennzeichnet, dass** der zumindest eine elektrische Leiter (30a, 30b, 30c, 30d, 30e, 30f) so angeordnet ist, dass er zu der einzigen elektrischen Leitung (40) parallel verläuft.

9. Füllstandsmessanordnung, die nach dem Prinzip der geführten Mikrowelle an einer Eindrahtleitung arbeitet, wobei die Füllstandmessanordnung aufweist:
eine Füllstandsmesseinrichtung (10), die eine einzige elektrische Leitung (40) zur Führung von Mikrowellenimpulsen zu einer Oberfläche eines zu messenden Füllgutes und zur Führung von reflektierten Impulsen zurück aufweist, und
eine Befestigungseinrichtung (20), an der die Füllstandmesseinrichtung (10) angebracht ist, **dadurch gekennzeichnet, dass** zumindest
ein zusätzlicher elektrischer Leiter (30a, 30b, 30c, 30d, 30e, 30f) in Form eines Stabes, eines Drahtes oder eines Seils, an der Befestigungseinrichtung (20) befestigt ist und von der einzigen elektrischen Leitung (40) der Füllstandmessanordnung in einem Abstand (a) angeordnet ist und sich von der Befestigungseinrichtung derart weg erstreckt, dass eine Impedanzanpassung zwischen einem Beginn der einzigen elektrischen Leitung (40) und einem durch die bis in ein Füllgut hineinreichende einzige elektrische Leitung (40) gebildeten offenen Wellenleiter erfolgt, wobei der zusätzliche Leiter (30a, 30b, 30c, 30d, 30e, 30f) eine wesentlich geringere Länge als die einzige elektrische Leitung (40) aufweist.

10. Füllstandsmessanordnung nach Anspruch 9, **dadurch gekennzeichnet, dass** die Befestigungseinrichtung ein Stutzen (20) ist, der einen Stutzenoberteil (21) und eine sich in Richtung eines Füllgutes erstreckende Stutzenwandung (22) aufweist mit einer Stutzenwandungshöhe (h), gemessen ab einem Austritt der Eindrahtleitung, und dass der zumindest eine zusätzliche elektrische Leiter sich maximal bis zur 0,25-fachen Stutzenwandungshöhe (h) erstreckt.

11. Füllstandsmessanordnung nach einem der Ansprüche 9 oder 10, **dadurch gekennzeichnet, dass** der zumindest eine zusätzliche elektrische Leiter sich maximal bis zur 2,5-fachen Stutzenwandungshöhe (h) erstreckt.

12. Füllstandsmessanordnung nach einem der Ansprüche 10 oder 11, **dadurch gekennzeichnet, dass** der zumindest eine zusätzliche elektrische Leiter (30a, 30b, 30c, 30d, 30e, 30f) in einem Bereich eines dem Stutzenoberteil (21) abgewandten freien Randes (23) der Stutzenwandung (22) endet.

13. Füllstandsmessanordnung nach einem der Ansprüche 10 bis 12, **dadurch gekennzeichnet, dass** der zumindest eine zusätzliche elektrische Leiter (30a, 30b, 30c, 30d, 30e, 30f) so angeordnet ist, dass der Abstand (a') zu der einzigen elektrischen Leitung (40) mit zunehmendem Abstand zu dem Stutzenoberteil (21) zunimmt.

14. Füllstandsmessanordnung nach einem der Ansprüche 9 bis 13, **dadurch gekennzeichnet, dass** der zumindest eine zusätzliche elektrische Leiter (30a, 30b, 30c, 30d, 30e, 30f) zumindest in einem Teillängenbereich gekrümmt ist.

15. Füllstandsmessanordnung nach einem der Ansprüche 10 bis 14, **dadurch gekennzeichnet, dass** der Stutzen (20) aus einem elektrisch leitenden Material besteht und der zumindest eine zusätzliche elektrische Leiter (30a, 30b, 30c, 30d, 30e, 30f) die Stutzenwandung (22) berührt.

16. Füllstandsmessanordnung nach Anspruch 9 bis 12, **dadurch gekennzeichnet, dass** der zumindest eine zusätzliche elektrische Leiter (30a, 30b, 30c, 30d, 30e, 30f) so angeordnet ist, dass er zu der einzigen elektrischen Leitung (40) parallel verläuft.

17. Füllstandsmessanordnung nach einem der Ansprüche 9 bis 16, **dadurch gekennzeichnet, dass** die einzigen elektrischen Leitung (40) bis in ein zu messendes Füllgut reicht.

## Claims

1. A support for mounting a level measuring device (10), comprising a single-wire operating according to the principle of the guided microwave and comprising a single electrical line (40) for guiding the microwave into a feed material, with
a support top (21) in which the level measuring device (10) with a single wire operating according to the principle of the guided microwave can be mounted,
**characterized in that**
at least one additional electrical conductor (30a, 30b, 30c, 30d, 30e, 30f) in the form of a rod, a wire or a cord, which electrical conductor (30a, 30b, 30c, 30d, 30e, 30f) is arranged at a distance (a) from the sole electrical line (40) of the level measuring device (10) to be mounted to the support top (21) and that extends away from the support top (21) in such a manner that an impedance adjustment between a beginning of the sole electrical line (40) and an open waveguide, formed by the sole electrical line (40) that extends into a feed material, takes place, wherein the additional conductor (30a, 30b, 30c, 30d, 30e, 30f) comprises a significantly shorter length than does the sole electrical line (40).

2. The support according to claim 1, furthermore with a support wall (22) arranged below the support top (21) and extending in the direction of a feed material, with a support wall height (h) measured from an exit of the single wire, wherein the at least one additional electrical conductor (30a, 30b, 30c, 30d, 30e, 30f) is arranged at a distance (a) from the sole electrical line (40) of the level measuring device (10) to be mounted at the support top (21) and extends from the support top (21) to at least 0.25 times the support wall height (h).

3. The support according to claim 2, **characterized in that** the at least one additional electrical conductor extends at the maximum to 2.5 times the support wall height (h).

4. The support according to one of claims 2 to 3, **characterized in that** the at least one additional electrical conductor (30a, 30b, 30c, 30d, 30e, 30f) ends in a region of a free edge (23) of the support wall (22), which free edge (23) faces away from the support top (21).

5. The support according to any one of claims 1 to 4, **characterized in that** the at least one additional electrical conductor (30a, 30b, 30c, 30d, 30e, 30f) is arranged in such a manner that the distance (a) to the sole electrical line (40) increases as the distance to the support top (21) increases.

6. The support according to any one of claims 1 to 5, **characterized in that** the at least one additional electrical conductor (30a, 30b, 30c, 30d, 30e, 30f) is curved in at least one partial length region.

7. The support according to any one of claims 2 to 6, **characterized in that** the support wall (22) comprises an electrically conductive material and the at least one additional electrical conductor (30a, 30b, 30c, 30d, 30e, 30f) touches the metallic support wall (22) that comprises an electrically conducting material.

8. The support according to any one of claims 1 to 4, **characterized in that** the at least one additional electrical conductor (30a, 30b, 30c, 30d, 30e, 30f) is arranged in such a manner that it extends so as to be parallel to the sole electrical line (40).

9. A level measuring arrangement that operates according to the principle of the guided microwave on a single wire, wherein the level measuring arrangement comprises:
a level measuring device (10) comprising a sole electrical line (40) for guiding microwave pulses to a surface of a feed material to be measured, and for guiding reflected pulses back, and
a fixing device (20) to which the level measuring device (10) is affixed, **characterized in that** at least one additional electrical conductor (30a, 30b, 30c, 30d, 30e, 30f) in the form of a rod, a wire or a cord, is affixed to the fixing device (20) and is arranged at a distance (a) from the sole electrical line (40) and that extends away from the fixing device in such a manner that an impedance adjustment between a beginning of the sole electrical line (40) and an open waveguide, formed by the sole electrical line (40) that extends into a feed material takes place, wherein the additional conductor (30a, 30b, 30c, 30d, 30e, 301) comprises a significantly shorter length than does the sole electrical line (40).

10. The level measuring arrangement according to claim 9, **characterized in that** the fixing device is a support (20) that comprises a support top (21) and a support wall (22) that extends in the direction of a feed material with a support wall height (h), measured from an exit of the single wire, and **in that** the at least one additional electrical conductor extends at the maximum to 0.25 times the support wall height (h).

11. The level measuring arrangement according to one of claims 9 or 10, **characterized in that** the at least one additional electrical conductor extends at the maximum to 2.5 times the support wall height (h).

12. The level measuring arrangement according to one of claims 10 or 11, **characterized in that** the at least one additional electrical conductor (30a, 30b, 30c, 30d, 30e, 30f) ends in a region of a free edge (23) of the support wall (22), which free edge (23) faces away from the support top (21).

13. The level measuring arrangement according to any one of claims 10 to 12, **characterized in that** the at least one additional electrical conductor (30a, 30b, 30c, 30d, 30e, 30f) is arranged in such a manner that the distance (a') to the sole electrical line (40) increases as the distance to the support top (21) increases.

14. The level measuring arrangement according to any one of claims 9 to 13, **characterized in that** the at least one additional electrical conductor (30a, 30b, 30c, 30d, 30e, 30f) is curved in at least one partial length region.

15. The level measuring arrangement according to any one of claims 10 to 14, **characterized in that** the support (20) comprises an electrically conductive material, and the at least one additional electrical conductor (30a, 30b, 30c, 30d, 30e, 30f) touches the support wall (22).

16. The level measuring arrangement according to any one of claims 9 to 12, **characterized in that** the at least one additional electrical conductor (30a, 30b, 30c, 30d, 30e, 30f) is arranged in such a manner that it extends so as to be parallel to the sole electrical line (40).

17. The level measuring arrangement according to any one of claims 9 to 16, **characterized in that** the sole electrical line (40) extends to a feed material to be measured.

## Revendications

1. Tubulure pour le montage d'un dispositif de mesure de niveau (10) avec circuit unifilaire, qui fonctionne selon le principe de la micro-onde guidée et est équipé d'une ligne électrique unique (40) pour le guidage de la micro-onde jusque dans un produit de remplissage, comprenant une partie supérieure de tubulure (21), dans laquelle peut être monté le dispositif de mesure de niveau (10) avec circuit unifilaire, qui fonctionne selon le principe de la micro-onde guidée, **caractérisée par** au moins un conducteur électrique supplémentaire (30a, 30b, 30c, 30d, 30e, 30f) en forme d'une barre, d'un fil ou d'un câble, qui est disposé à une distance (a) de la ligne électrique unique (40) du dispositif de mesure de niveau (10), à monter sur la partie supérieure de tubulure (21), et s'étend à l'écart de la partie supérieure de tubulure (21) de telle sorte qu'une adaptation d'impédance s'effectue entre un début de la ligne électrique unique (40) et un guide d'ondes ouvert, formé par la ligne électrique unique (40) qui s'étend jusque dans un produit de remplissage, le conducteur supplémentaire (30a, 30b, 30c, 30d, 30e, 30f) présentant une longueur essentiellement inférieure à celle de la ligne électrique unique (40).

2. Tubulure selon la revendication 1, comprenant en outre une paroi de tubulure (22) disposée au-dessous de la partie supérieure de tubulure (21) et s'étendant en direction d'un produit de remplissage, avec une hauteur de paroi de tubulure (h) mesurée à partir d'une sortie du circuit unifilaire, le au moins un conducteur électrique supplémentaire (30a, 30b, 30c, 30d, 30e, 30f) étant disposé à une distance (a) de la ligne électrique unique (40) du dispositif de mesure de niveau (10), à monter sur la partie supérieure de tubulure (21), et s'étendant de la partie supérieure de tubulure (21) jusqu'à au moins 0,25 fois la hauteur (h) de la paroi de tubulure.

3. Tubulure selon la revendication 2, **caractérisée en ce que** le au moins un conducteur électrique supplémentaire s'étend au maximum jusqu'à 2,5 fois la hauteur (h) de la paroi de tubulure.

4. Tubulure selon l'une des revendications 2 à 3, **caractérisée en ce que** le au moins un conducteur électrique supplémentaire (30a, 30b, 30c, 30d, 30e, 30f) s'achève dans une zone d'un bord libre (23), opposé à la partie supérieure de tubulure (21), de la paroi de tubulure (22).

5. Tubulure selon l'une des revendications 1 à 4, **caractérisée en ce que** le au moins un conducteur électrique supplémentaire (30a, 30b, 30c, 30d, 30e, 30f) est disposé de sorte que la distance (a) par rapport à la ligne électrique unique (40) augmente avec une distance croissante par rapport à la partie supérieure de tubulure (21).

6. Tubulure selon l'une des revendications 1 à 5, **caractérisée en ce que** le au moins un conducteur électrique supplémentaire (30a, 30b, 30c, 30d, 30e, 30f) est cintré, au moins dans une zone longitudinale partielle.

7. Tubulure selon l'une des revendications 2 à 6, **caractérisée en ce que** la paroi de tubulure (22) se compose d'un matériau conducteur électriquement et que le au moins un conducteur électrique supplémentaire (30a, 30b, 30c, 30d, 30e, 30f) est au contact de la paroi de tubulure métallique (22), composée d'un matériau électriquement conducteur.

8. Tubulure selon l'une des revendications 1 à 4, **caractérisée en ce que** le au moins un conducteur électrique (30a, 30b, 30c, 30d, 30e, 30f) est disposé de sorte qu'il s'étend parallèlement à la ligne électrique unique (40).

9. Agencement de mesure de niveau, qui fonctionne selon le principe de la micro-onde guidée sur un circuit unifilaire, l'agencement de mesure de niveau comprenant :
un dispositif de mesure de niveau (10), qui présente une ligne électrique unique (40) pour le guidage d'impulsions micro-ondes en direction d'une surface d'un produit de remplissage à mesurer et pour le guidage en retour d'impulsions réfléchies, et
un dispositif de fixation (20), sur lequel est monté le dispositif de mesure de niveau (10),
**caractérisé par**
au moins un conducteur électrique supplémentaire (30a, 30b, 30c, 30d, 30e, 30f) en forme d'une barre, d'un fil ou d'un câble, qui est fixé sur le dispositif de fixation (20), est disposé à une distance (a) de la ligne électrique unique (40) de l'agencement de mesure de niveau, et s'étend à l'écart du dispositif de fixation de telle sorte qu'il s'effectue une adaptation d'impédance entre un début de la ligne électrique unique (40) et un guide d'ondes ouvert, formé par la ligne électrique unique (40) qui s'étend jusque dans un produit de remplissage, le conducteur supplémentaire (30a, 30b, 30c, 30d, 30e, 30f) présentant une longueur essentiellement inférieure à celle de la ligne électrique unique (40).

10. Agencement de mesure de niveau selon la revendication 9, **caractérisé en ce que** le dispositif de fixation est une tubulure (20), qui présente une partie supérieure de tubulure (21) et une paroi de tubulure (22) s'étendant en direction d'un produit de remplissage, avec une hauteur (h) de paroi de tubulure mesurée à partir d'une sortie du circuit unifilaire, et que le au moins un conducteur électrique supplémentaire s'étend au maximum jusqu'à 0,25 fois la hauteur (h) de la paroi de tubulure.

11. Agencement de mesure de niveau selon l'une des revendications 9 et 10, **caractérisé en ce que** le au moins un conducteur électrique supplémentaire s'étend au maximum jusqu'à 2,5 fois la hauteur (h) de la paroi de tubulure.

12. Agencement de mesure de niveau selon l'une des revendications 10 et 11, **caractérisé en ce que** le au moins un conducteur électrique supplémentaire (30a, 30b, 30c, 30d, 30e, 30f) s'achève dans une zone d'un bord libre (23), opposé à la partie supérieure de tubulure (21), de la paroi de tubulure (22).

13. Agencement de mesure de niveau selon l'une des revendications 10 à 12, **caractérisé en ce que** le au moins un conducteur électrique supplémentaire (30a, 30b, 30c, 30d, 30e, 30f) est disposé de sorte que la distance (a') par rapport à la ligne électrique unique (40) augmente avec une distance croissante par rapport à la partie supérieure de tubulure (21).

14. Agencement de mesure de niveau selon l'une des revendications 9 à 13, **caractérisé en ce que** le au moins un conducteur électrique supplémentaire (30a, 30b, 30c, 30d, 30e, 30f) est cintré au moins dans une zone longitudinale partielle.

15. Agencement de mesure de niveau selon l'une des revendications 10 à 14, **caractérisé en ce que** la tubulure (20) se compose d'un matériau électriquement conducteur et le au moins un conducteur électrique supplémentaire (30a, 30b, 30c, 30d, 30e, 30f) est au contact de la paroi de tubulure (22).

16. Agencement de mesure de niveau selon les revendications 9 à 12, **caractérise en ce que** le au moins un conducteur électrique supplémentaire (30a, 30b, 30c, 30d, 30e, 30f) est disposé de sorte qu'il s'étend parallèlement à la ligne électrique unique (40).

17. Agencement de mesure de niveau selon l'une des revendications 9 à 16, **caractérisé en ce que** la ligne électrique unique (40) s'étend jusque dans un produit de remplissage à mesurer.
